# EUROPÄISCHE PATENTSCHRIFT

(11) **EP 1 961 592 B1**
(45) Veröffentlichungstag und Bekanntmachung des Hinweises auf die Patenterteilung: **16.06.2010**
(21) Anmeldenummer: 07290241.4
(22) Anmeldetag: 23.02.2007
(51) Int. Cl.: B60H 1/00, F25B 27/00

(54) **Klimaanlage für ein Fahrzeug**
Air conditioning system for a vehicle
Climatisation pour véhicule

(43) Veröffentlichungstag der Anmeldung: 27.08.2008
(73) Patentinhaber: Behr GmbH & Co. KG, 70469 Stuttgart (DE); Behr France Rouffach SAS, 68250 Rouffach (FR); Behr America, Inc, Troy, Michigan 48083 (US)
(72) Erfinder: Feuerecker, Günther, Dr. rer. nat., 70567 Stuttgart (DE); Lochmahr, Karl, Dipl.-Ing. (FH), 71665 Vaihingen/Enz (DE); Müller, Frank, Dipl.-Ing., 75397 Simmozheim (DE); Neumeister, Dirk, Dr., 70374 Stuttgart (DE); Obradovich, Richard, 48154 Livonia (US); Schlinke, Gunnar, Troy MI 48085 (US); Schmittheisler, Christophe, 67680 Epfig (FR); Strauß, Thomas, Dipl.-Ing. (FH), 73274 Notzingen (DE); Weinbrenner, Marcus, Dipl.-Ing., 70839 Gerlingen (DE)

(56) Entgegenhaltungen:
- US-A1- 2005 178 523
- US-A1- 2006 080 985

## Beschreibung

Die Erfindung betrifft eine Klimaanlage für ein Fahrzeug gemäß dem Oberbegriff des Anspruchs 1.

Um den Energieverbrauch von Fahrzeugen, insbesondere von Kraftfahrzeugen, zu senken und Energie zu sparen, werden in Klimaanlagen von Niederverbrauchsfahrzeugen Wärmepumpensysteme verwendet. Viele Wärmepumpen benutzen als Wärmequelle die Umgebungsluft. Da hier Umgebungswärme zum Heizen nutzbar gemacht wird, können solche Systeme einen vorteilhaften Energieverbrauch aufweisen.

Viele dieser Wärmepumpen nutzen den Verdampfer, der im Kühlbetrieb die Kabinen-Zuluft abkühlt, zusätzlich als Heizer, der im Heizbetrieb die Kabinen-Zuluft erwärmt. Dies hat jedoch den Nachteil, dass sich am Verdampfer/Heizer beim Kühlen und Entfeuchten Kondenswasser niederschlägt. Wird dieser feuchte Verdampfer zum Heizen verwendet, kommt es zum Beschlagen der Scheiben (Flash-Fogging), was aus Sicherheitsgründen unbedingt vermieden werden muss. Eine solche Konstellation bei der Heizen und Kühlen zeitlich nahe aufeinanderfolgen, kommt häufig in der klimatischen Übergangszeit im Frühjahr und Herbst vor.

Zuverlässige Abhilfe ohne Einschränkungen schafft hier die Hinzunahme eines weiteren Wärmeübertragers im Zuluftstrom, der nur zum Heizen verwendet wird, während der Verdampfer ausschließlich zum Kühlen und Entfeuchten verwendet wird, wie es beispielsweise in der DE 39 07 201 beschrieben wird. Diese Schaltungsvariante erweist sich allerdings als technisch aufwändig hinsichtlich der Verschaltung des Kältemittelkreisfaufs und Bewältigung der Kältemittelverlagerungen im System.

Die DE 101 49 757 A1 beschreibt ein Verfahren zur scheibenbeschlagverhindernden Wärmepumpenleistungsregelung einer wahlweise im Kühlbetriebsmodus und Wärmepumpenmodus betreibbaren Fahrzeug-Klimaanlage, die einen im Kühlbetriebsmodus als Verdampfer zur Luftstromkühlung und im Wärmepumpenmodus als Kondensator/Gaskühler zur Luftstromerwärmung betreibbaren Wärmeübertrager aufweist. Hierbei ist ein Kältemittelkreislauf mit einer Pumpe, einem 4/2-Wegeventil zur Strömungsrichtungsumkehr, einem ersten Wärmeübertrager, einem Expansionsorgan, einem zweiten Wärmeübertrager und einem Sammler vorgesehen. Einer der Wärmeübertrager ist in einem Außenluftstrom angeordnet, der zweite Wärmeübertrager ist im dem Fahrzeuginnenraum zuzuführenden Luftstrom angeordnet, in welchem auch ein vom Motor-Kühlmittel durchströmter Heizer angeordnet ist. Die Leistungsregelung bei einer Gefahr durch Scheibenbeschlag führt allerdings zu merklichen Komforteinbussen. Dieses Konzept ist deshalb bei Fahrzeugantrieben, die über lange Zeit keine ausreichende Wärme zur Verfügung stellen, als einzige Quelle zur Fahrzeugheizung nicht ausreichend.

Ein Nachteil der Wärmepumpensystemen, welche Umgebungsluft als Wärmequelle verwenden, ist die zunehmende Verstopfung des Umgebungswärmeübertragers durch das Abscheiden von Reif (die so genannte Vereisung des Umgebungswärmeübertragers). Dies beschränkt die Betriebsdauer der Wärmepumpe.

Ein weiterer Nachteil der Wärmepumpensysteme, welche Umgebungsluft als Wärmequelle verwenden, ist die Abnahme der möglichen Heizleistung bei sinkenden Umgebungstemperaturen, was dem Heizleistungsbedarf entgegengesetzt ist. Dies hat zur Folge, dass ein Wärmepumpensystem sehr groß und teuer ausgelegt wein muss, um auch bei den seltenen, extrem kalten Klimazuständen eine ausreichende Heizleistung bereitstellen zu können. Aufgrund der während des Betriebs vorkommenden Drucklagen im Kältemittelkreislauf gibt es darüber hinaus Einschränkungen bei der Wahl möglicher Kältemittel des Wärmepumpenkreislaufs.

Aus der DE 102 25 055 A1 ist eine Klimaanlage für ein Kraftfahrzeug bekannt, mit einem Kältemittelkreislauf mit mehreren Wärmeübertragern durch die ein Kältemittel leitbar ist, und einem Kühlmittelkreislauf, wobei ein Wärmeübertrager dem Wärmeaustausch zwischen Kältemittel und Kühlmittel dient. Im Heizbetrieb sind hierbei zwei Heizer vorgesehen, einer ist Teil des Kältemittelkreislaufs, der andere ist Teil des Kühlmittelkreislaufs, wobei der Heizer des Kühlmittelkreislaufs zwischen den Wärmeübertragern des Kältemittelkreislaufs angeordnet ist. Einzelne Bereiche des Kältemittelkreislaufs werden bei bestimmten Betriebsbedingungen nicht durchströmt. Aus diesen nicht benötigten Bereichen des Kältemittelkreislaufs ist eine Kältemittelrückführung in die im entsprechenden Betrieb aktiven Bereiche vorgesehen. Dieses Konzept erfordert jedoch die ständige Verfügbarkeit einer Wärmequelle, was bei Brennstoffzellenfahrzeugen oder Range-Extender-Hybridfahrzeugen nicht gegeben ist.

Das Dokument US 2005178523 offenbart den Oberbegriff des Anspruchs 1.

Es ist Aufgabe der Erfindung, die eine verbesserte Klimaanlage zur Verfügung zu stellen. Diese soll zum einen ein Wärmepumpensystem zur energieeffizienten Bereitstellung von Heizwärme bereitstellen, und zum anderen die Anforderungen an Komfort und Sicherheit gewährleisten. Darüber hinaus soll das Wärmepumpensystem kostengünstig dimensioniert sein.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist bei Klimaanlage für ein durch einen Motor, insbesondere einen Elektromotor, angetriebenes Fahrzeug mit einem Kältemittelkreislauf mit mehreren Wärmeübertragern vorgesehen, durch die ein Kältemittel für einen Wärmetausch mit der sie durchströmenden Luft leitbar ist, wobei die Wärmeübertrager in Abhängigkeit des Betriebszustandes der Klimaanlage als Heizer oder als Verdampfer betreibbar sind, und mindestens ein dritter Wärmeübertrager im Kältemittelkreislauf vorgesehen ist, welcher dem Wärmetausch mit einem getrennt vom Kältemittelkreislauf ausgebildeten Kühlmittelkreislauf dient. Das Vorsehen eines weiteren Wärmeübertragers im Kältemittelkreislauf erhöht den Wirkungsgrad des Kältemittelkreislaufs.

Der Kältemittelkreislauf weist bevorzugt eine Strömungsrichtungsumkehr für das Kältemittel in zumindest einem Bereich des Kältemittelkreislaufs auf, in welchem die drei Wärmeübertrager angeordnet sind. Die Richtungsumkehr kann auf einfache Weise durch ein 4/2-Wegeventil vorgesehen sein, wobei ein Teil des Kältemittelkreislaufs, in welchem die Pumpe und ein Sammler angeordnet sind, stets in gleicher Richtung durchströmt werden, während der andere Teil des Kältemittelkreislaufs, in welchem die mindestens drei Wärmeübertrager und mindestens ein Expansionsorgan angeordnet sind, in Abhängigkeit des gewünschten Betriebs durchströmbar sind.

Bevorzugt sind im Kältemittelkreislauf zwei der Wärmeübertrager hintereinander angeordnet und vom dritten Wärmeübertrager durch ein Expansionsorgan getrennt, wobei bei einem Heizbetrieb, also einer Wärmeaufnahme über die Wärmeübertrager, zuerst ein Umgebungs-Wärmeübertrager und danach ein Kühlmittel/Kältemittel-Wärmeübertrager vom Kältemittel zur Aufnahme von Wärme aus der Umgebung bzw. vom Kühlmittel durchströmt werden. Eine derartige Anordnung ermöglicht es, dass die maximale Leistung des Umgebungswärmeübertragers verringert werden kann, wodurch die Gefahr des Vereisens verringert wird, was wiederum die mögliche Betriebsdauer in einem Wärmepumpen-Kreisprozess verlängert.

Bevorzugt sind zwei Kühlmittelkreisläufe vorgesehen, die jeweils von einer Pumpe umgewälzt werden, wobei die beiden Kreisläufe miteinander verbindbar sind, so dass ein Kühlmittelaustausch erfolgt. Eine derartige Ausgestaltung ermöglicht die Nutzung unterschiedlicher Wärmequellen, wie Umgebungsluft und Abluft. Ferner kann die Abwärme des Kühlkreislaufs für einen Reheatbetrieb verwendet werden. Hierfür sind insbesondere bevorzugt im verbundenen Zustand der Kühlmittelkreisläufe ein Heizer, welcher der Erwärmung der vom Verdampfer kommenden und dem Fahrzeuginnenraum zuzuführenden Luft dient, und der Wärmeübertrager, welcher zum Wärmetausch mit dem Kältemittel dient, vom Kühlmittel durchströmbar, wobei Wärme vom Kältemittelkreislauf zum Heizer geführt wird.

Vorzugsweise gibt in einem normalen Kühlbetrieb der Kühlmittel/Kältemittel-Wärmeübertrager Wärme an das Kühlmittel ab, welches die aufgenommene Wärme seinerseits über einen im Kühlkreislauf angeordneten Abluftwärmeübertrager an die Umgebung abgibt.

Bevorzugt ist ein Reheatbetrieb möglich, bei dem die vom kältemittelgekühlten Verdampfer kommende, dem Fahrzeuginnenraum zuzuführende Luft wieder erwärmt wird, wobei der Kühlmittel/Kältemittel-Wärmeübertrager Wärme an das Kühlmittel abgibt, welches die aufgenommene Wärme seinerseits über einen Heizer in einem Kühlkreislauf an die dem Fahrzeuginnenraum zuzuführende Luft abgibt.

Besonders bevorzugt ist eine zweite Art eines Reheatbetriebs möglich, bei dem die vom kältemittelgekühlten Verdampfer kommende, dem Fahrzeuginnenraum zuzuführende Luft wieder erwärmt wird, wobei der Kühlmittel/Kälternntel-Wärmeübertrager Wärme an das Kühlmittel abgibt, welches die aufgenommene Wärme seinerseits über einen im Kühlkreislauf angeordneten Abluftwärmeübertrager an die Umgebung abgibt, und die dem Fahrzeuginnenraum zuzuführende Luft über einen Heizer erwärmt wird, welcher in einem getrennten Kühlkreislauf angeordnet ist und die Abwärme eines anderen Bauteils, insbesondere eines Verbrennungsmotors oder einer Brennstoffzelle, verwendet.

Bevorzugt wird im Wärmepumpen-Heizbetrieb über einen im Kühlkreislauf angeordneten Abluftwärmeübertrager Wärme aus der Umgebung aufgenommen, die über das Kühlmittel an den Kühlmittel/Kältemittel-Wärmeübertrager weitergeleitet und an das Kältemittel abgegeben wird.

Bevorzugt ist zusätzlich ein konventionelles Heizsystem vorgesehen, beispielsweise eine elektrische PTC-Heizung für die Kabinenzuluft oder ein elektrischer oder kraftstoffbetriebener Zuheizer für das Kühlmittel. Dieses konventionelle Heizsystem ist in der Lage, die Beheizung der Kabine sowie die Eis- und Beschlagungsfreiheit der Scheiben zu gewährleisten, wenn der Betrieb der Wärmepumpe auf Grund tiefer Temperaturen nicht wirtschaftlich oder auf Grund von Einschränkungen (Flash-Fogging, Umgebungswärmeübertragervereisung) nicht möglich ist.

Im Folgenden wird die Erfindung anhand eines Ausführungsbeispiels unter Bezugnahme auf die Zeichnung näher erläutert. In der Zeichnung zeigen:
- Fig. 1: eine schematische Darstellung der Kühl- und Kältemittelkreisläufe einer Klimaanlage gemäß dem Ausführungsbeispiel im Kühlbetrieb,
- Fig. 2: die Kühl- und Kältemittelkreisläufe von Fig. 1 im Kühlbetrieb mit einem Reheatbetrieb (Abwärme Kältekreislauf),
- Fig. 3: die Kühl- und Kältemittelkreisläufe von Fig. 1 im Kühlbetrieb mit einem Reheatbetrieb (Abwärme Verbrennungsmotor oder Brennstoffzellensystem),
- Fig.4: die Kühl- und Kältemittelkreisläufe von Fig. 1 im Wärmepumpen-Heizbetrieb,
- Fig. 5: die Kühl- und Kältemittelkreisläufe von Fig. 1 im Wärmepumpen-Heizbetrieb unter Nutzung der Motorabwärme,
- Fig. 6: die Kühl- und Kältemittelkreisläufe von Fig. 1 im Wärmepumpen-Heizbetrieb unter Nutzung eines gemäß einer Variante vorgesehenen kühlmittelseitigen Zuheizers.

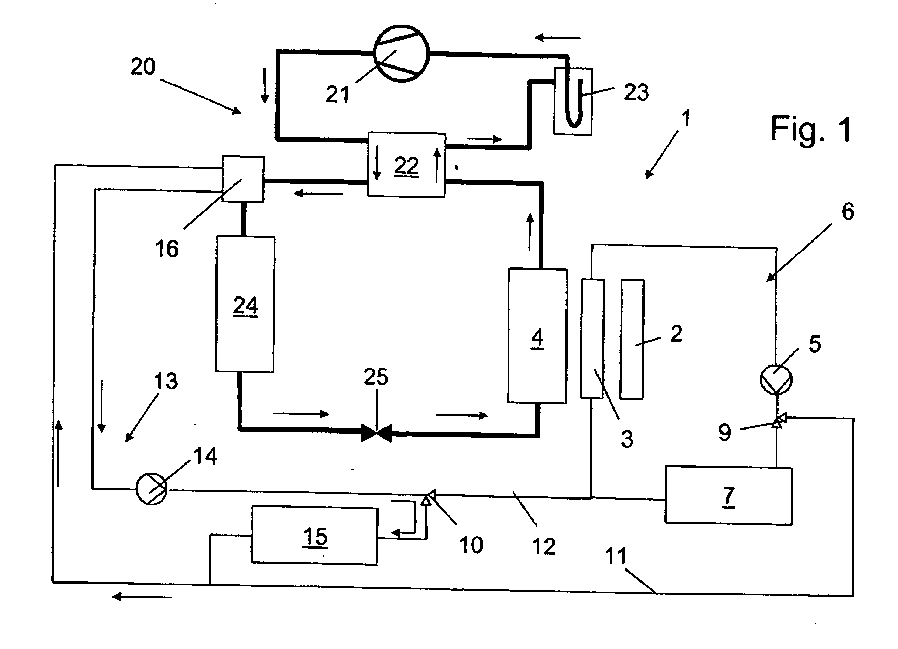

Die Figuren 1 bis 5 zeigen eine Anordnung verschiedener Kühl- und Kältemittelkreisläufe, die Teil einer Kraftfahrzeug-Klimaanlage 1 sind und zur Temperierung des Fahrzeuginnenraums zumindest indirekt beitragen. Für die Temperierung des Fahrzeuginnenraums sind ein elektrisch betreibbarer PTC-Heizer 2, ein Heizer 3 und ein sowohl als Verdampfer als auch Wärmepumpen-Heizer betreibbarer Wärmeübertrager, im Folgenden als innenraum-Wärmeübertrager 4 bezeichnet, vorgesehen.

Der Heizer 3 ist - je in einem von einer ersten Pumpe 5 umwälzbaren ersten Kühlkreislauf 6 angeordnet, wobei der Kreislauf im normalen Heizbetrieb, d.h. bei laufendem Verbrennungsmotor 7 und Heizbetrieb über die vom Kühlmittel transportierte Motorabwärme, derart schaltbar ist, dass die erste Pumpe 5 das Kühlmittel zum Verbrennungsmotor und anschließend zum Heizer 3 fördert. Dieser Kreislauf ist (wie auch bei konventionellen Fahrzeugen) Teil des Motorkühlkreislaufs, der unter anderem auch ein Thermostatventil und einen Kühler beinhaltet, welcher nicht nutzbare Abwärme an die Umgebung abführt. Dieser Teil des Kühlkreislaufs ist nicht eigens dargestellt, da seine Ausgestaltung für die Erfindung unwesentlich ist.

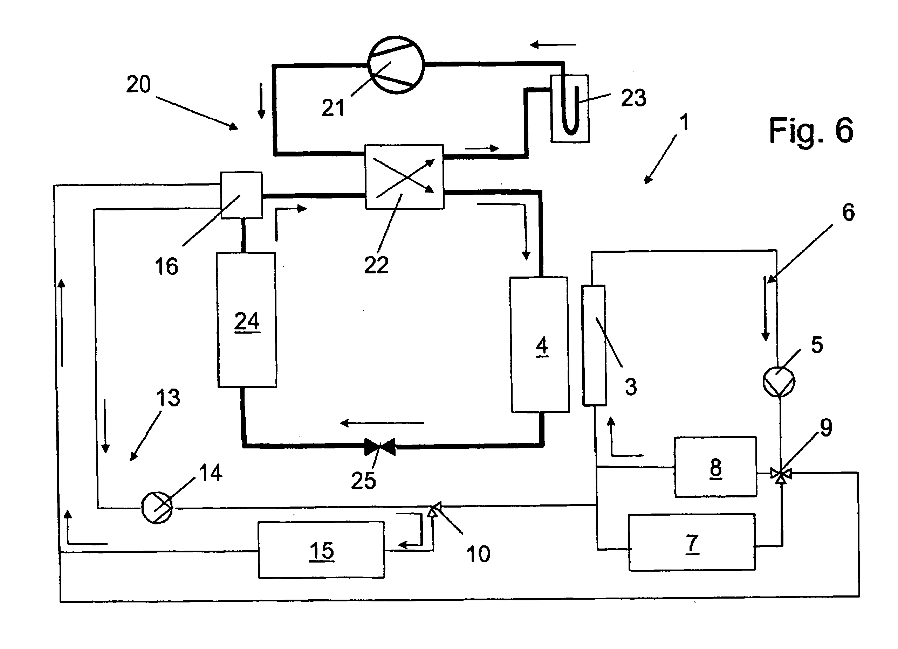

In Fig. 6 ist eine Variante dargestellt, gemäß der an Stelle des PTC-Heizers 2 parallel zum Verbrennungsmotor 7 ein Zuheizer 8 angeordnet ist. Auf diese Variante wird an späterer Stelle näher eingegangen.

Der erste Kühlkreislauf 6 ist über mittels Ventilen 9 und 10 regelbare Verbindungsleitungen 11 und 12 mit einem zweiten Kühlkreislauf 13 direkt verbindbar, wobei im zweiten Kühlkreislauf 13 eine zweite Pumpe 14, ein Abluftwärmeübertrager 15 und ein Kühlmittel/Kältemittel-Wärmeübertrager 16 angeordnet sind. Die erste Verbindungsleitung 11 vom ersten Kühlkreislauf 6 zum zweiten Kühlkreislauf 13 zweigt nach der ersten Pumpe 5 vom ersten-Kühlkreislauf 6 ab, wobei das erste Ventil 9 an der Abzweigung angeordnet ist, und mündet nach dem Abluftwärmeübertrager 15 und vor dem Kühlmittel/Kältemittel-Wärmeübertrager 16 in den zweiten Kühlkreislauf 13 ein. Die zweite Verbindungsleitung 12 zweigt nach der zweiten Pumpe 14 vom Kühlkreislauf 13 ab, wobei das zweite Ventil 10 an der Abzweigung angeordnet ist, und mündet nach dem Verbrennungsmotor 7 und vor dem Heizer 3 in den ersten Kühlkreislauf 6 ein. Durch die beiden Ventile 9, 10 und die Verbindungsleitungen 11, 13 können somit der Abluftwärmeübertrager 15 und der Verbrennungsmotor 7 (und der Zuheizer 8) umströmt werden. Ferner ist ein Kühlmittelaustausch zwischen den beiden Kühlkreisläufen 6 und 13 möglich.

Ferner ist, wie aus der Zeichnung ersichtlich, ein mit größerer Strichstärke dargestellter Wärmepumpen-Kältemittelkreislauf 20 vorgesehen, wobei das Kältemittel von einem Kältemittelverdichter 21 umgewälzt wird. Durch das Vorsehen eines 4/2-Wegeventils 22 kann das Kältemittel einen Teil des Kältemittelkreislaufs 20 - je nach Stellung des Ventils 22 - in beiden Richtungen durchströmen. In Strömungsrichtung des Kältemittels gesehen ist im Pumpenabschnitt des Kältemittelkreislaufs 20 vor dem Kältemittelverdichter 21 ein Sammler 23 angeordnet. Im anderen Abschnitt des Kältemittelkreislaufs 20, im Folgenden als Wärmetauschabschnitt bezeichnet, sind besagter Kühlmittel/Kältemittel-Wärmeübertrager 16, ein Umgebungs-Wärmeübertrager 24, ein Expansionsorgan 25 und besagter Innenraum-Wärmeübertrager 4 angeordnet.

Im Folgenden wird die Funktion der Klimaanlage 1 anhand verschiedener Betriebszustände näher erläutert.

Fig. 1 zeigt den Kühlbetrieb der Klimaanlage 1 bei stehendem Verbrennungsmotor 7. Hierbei wird der erste Kühlkreislauf 6 nicht durchströmt, d.h. es wird keine Wärme vom Verbrennungsmotor 7 zum Heizer 3 transportiert. Der Kältemittelkreislauf 20 wird von dem Kältemittelverdichter 21 umgewälzt, wobei das 4/2-Wegeventil 22 derart gestellt ist, dass das Kältemittel von dem Verdichter zum Kühlmittel/Kältemittel-Wärmeübertrager 16, anschließend zum Umgebungswärmeübertrager 24, zum Expansionsorgan 25, zum Innenraum-Wärmeübertrager 4, zum Sammler 23 und wieder zum Kältemittelverdichter 21 strömt.

Die vom Innenraum-Wärmeübertrager 4, der in diesem Fall als Verdampfer arbeitet, d.h. die denselben durchströmende Luft kühlt, aufgenommene Wärme wird im Kältemittelkreislauf 20 zum Kühlmittel/Kältemittel-Wärmeübertrager 16 transportiert und teilweise an das Kühlmittel, das im zweiten Kühlkreislauf 13 umgewälzt wird, abgegeben. Hierbei wirkt der Kühlmittel/Kältemittel-Wärmeübertrager 16 als Abhitzer und gegebenenfalls als Kondensator, in welchem das Kältemittel bei entsprechenden Betriebsbedingungen bis zum Taupunkt abgekühlt wird und (teilweise) kondensiert. Eine weitere Kühlstufe bildet der nachfolgende Umgebungs-Wärmeübertrager 24, über welchen ebenfalls Wärme abgegeben wird, in diesem Fall an die Umgebung. Die über den Kühlmittel/Kältemittel-Wärmeübertrager 16 vom zweiten Kühlkreislauf 13 aufgenommene Abwärme, wird ihrerseits über den Abluftwärmeübertrager 15 an die Umgebung abgegeben, so dass - in Folge der mehrstufigen Wärmeabgabe - die Leistung und der Wirkungsgrad der Klimaanlage 1 verbessert wird.

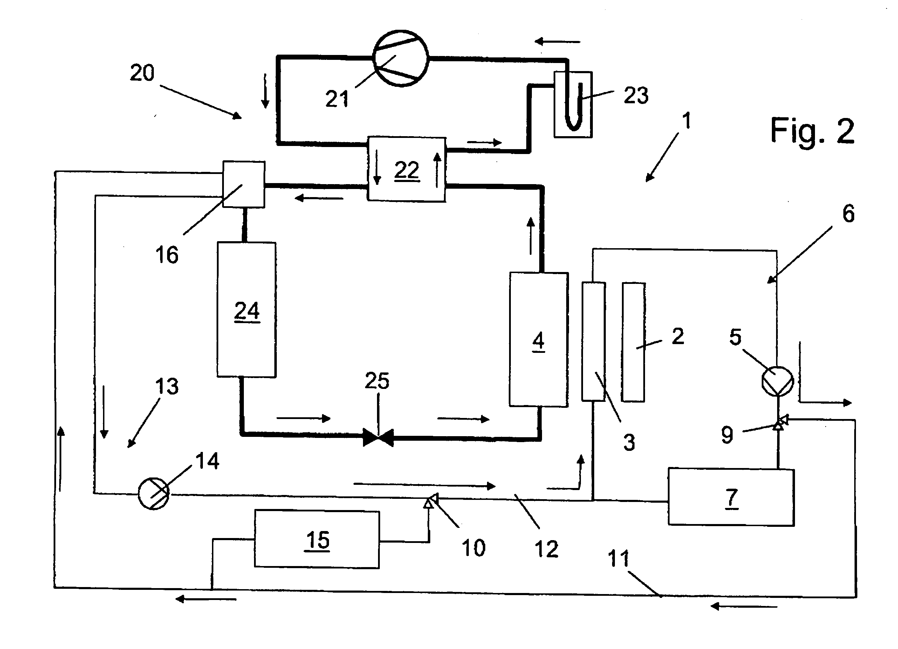

Fig. 2 zeigt den Kühlbetrieb mit einem Reheatbetrieb, wobei vorliegend die Abwärme des Kältekreislauf verwendet wird, um die kalte, entfeuchtete Luft, die den als Verdampfer wirkenden Innenraum-Wärmeübertrager 4 durchströmt hat, wieder aufzuwärmen. Hierbei ist wiederum der Verbrennungsmotor 7 nicht in Betrieb. Die Funktion des Wärmepumpen-Kältemütelkreislaufs 20 entspricht der zuvor beschriebenen Funktion, so dass hierauf nicht näher eingegangen wird.

Wie aus der Zeichnung ersichtlich, sind bei diesem Betrieb die beiden Kühlkreisläufe 6 und 13 miteinander verbunden, d.h. die beiden Ventile 9 und 10 sind in Richtung der Verbindungsleitungen 11 bzw. 12 geöffnet. Das Kühlmittel wird von beiden Pumpen 5 und 14 umgewälzt. Es gelangt, ausgehend von der ersten Pumpe 5, die Verbindungsleitung 11 zum Kühlmitte./Kältemittel-Wärmeübertrager 16, zur zweiten Pumpe 14, zum Heizer 3 und wiederum zur ersten Pumpe 5. Das Kühlmittel nimmt hierbei im Kühlmittel/Kältemittel-Wärmeübertrager 16 Wärme vom Kältemittel auf, welche zur Erwärmung der den Heizer 3 durchströmenden, vom als Verdampfer arbeitenden Innenraum-Wärmetauscher 4 kommenden und dem Fahrzeuginnenraum zuzuführenden Luft dient. Die Abwärme des (verbundenen) Kältemittelkreislaufs wird somit dazu verwendet, die kalte, entfeuchtete Luft wieder aufzuwärmen.

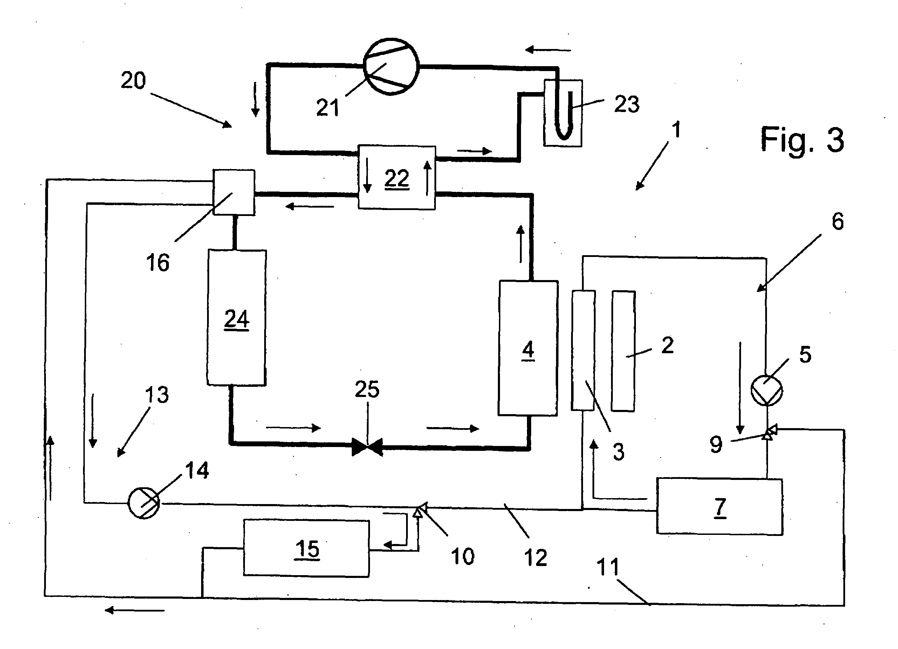

Fig. 3 zeigt den Kühlbetrieb mit einem Reheatbetrieb, wobei vorliegend die Abwärme des ersten Kühlkreislaufs 6 verwendet wird, um die kalte, entfeuchtete Luft, die den als Verdampfer wirkenden Innenraum-Wärmeübertrager 4 durchströmt hat, wieder aufzuwärmen. Hierbei läuft im Unterschied zum in Fig. 2 dargestellten Betrieb der Verbrennungsmotor 7 und das Kühlmittel ist ausreichend warm, um die Luft zu erwärmen. Die Funktion des Wärmepumpen-Kältemittelkreislauf 20 entspricht der zuvor unter Bezugnahme auf Fig. 1 beschriebenen Funktion, so dass hierauf nicht näher eingegangen wird.

Im Unterschied zum zuvor beschriebenen Reheatbetrieb wird bei laufendem Verbrennungsmotor 7 und ausreichend warmem Kühlmittel im ersten Kühlkreislauf 6 die Motorabwärme zum Wiederaufwärmen der Luft verwendet. Der zweite Kühlmittelkreislauf 13 ist bei diesem Betrieb vom ersten Kühlkreislauf 6 abgetrennt und wird - umgewälzt durch die zweiten Pumpe 14 - derart betrieben, dass das Kühlmittel, welches im Kühlmitte./Kältemittel-Wärmeübertrager 16 Abwärme vom Kältemittel aufnimmt, die aufgenommene Abwärme über den Abluftwärmeübertrager 15 an die Umgebung abgibt. Somit dient der zweiten Kühlmittelkreislauf 13 bei diesem Betrieb zur Erhöhung des Wirkungsgrades des Kältemittelkreislaufs 20.

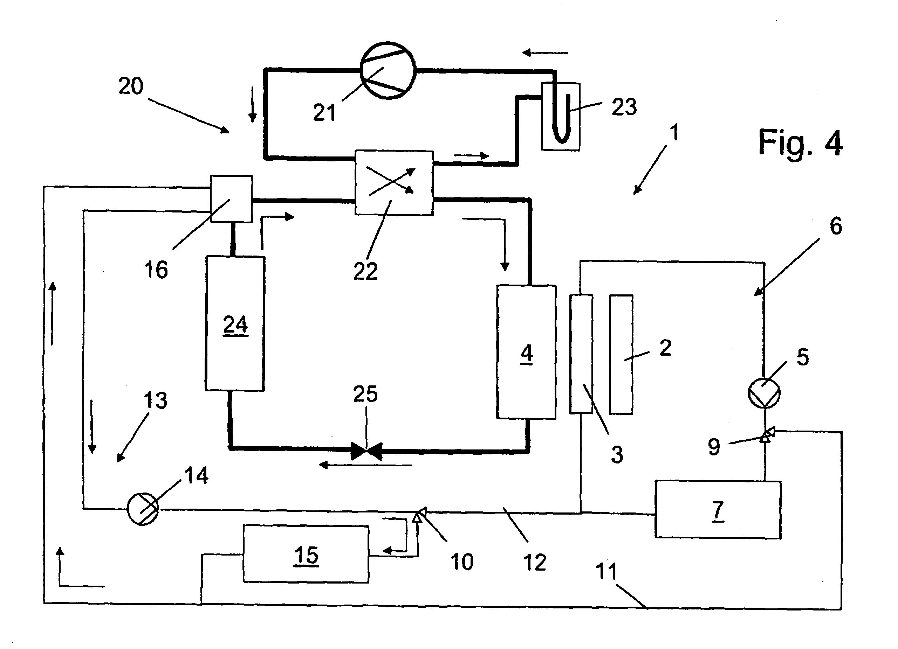

Gemäß dem in Fig. 4 dargestellten Betrieb ist ein Heizbetrieb bei stehendem Verbrennungsmotor 7 vorgesehen, d.h. der bisher als Verdampfer benutzte Innenraum-Wärmeübertrager 4 wird bei diesem Betrieb als Heizer zur Erwärmung der dem Fahrzeuginnenraum zuzuführenden Luft verwendet.

Der Wärmepumpen-Kältemittelkreislauf 20 wird im Wärmetauschabschnitt in Folge der geänderten Stellung des 4/2-Wegeventils 22 in geänderter Reihenfolge durchströmt, also das von dem Kältemittelverdichter 21 kommende Kältemittel durchströmt zuerst den Innenraum-Wärmeübertrager 4, anschließend das Expansionsorgan 25, den Umgebungswärmeübertrager 24, den Kühlmittel/Kältemittel-Wärmaübertrager 16 und den Sammler 23 bevor es wieder zum Kältemittelverdichter 21 gelangt. Ferner wird im zweiten Kühlkreislauf 13 von der zweiten Pumpe 14 das Kühlmittel umgewälzt, wobei es im Abluftwärmeübertrager 15 Wärme aus der Umgebung aufnimmt und dieselbe zum Kühlmitfiel/Kältemittel-Wärmeübertrager 16 transportiert.

Da das Kältemittel des Wärmepumpen-Kältemittelkreislaufs 20 durch die Entspannung durch das Expansionsorgan 25 abgekühlt wird, nimmt es über den Umgebungs-Wärmeübertrager 24 Wärme (z.B. von der Abluft des Fahrzeuginnenraums und/oder ggf. weiterer vorhandener Wärmequellen) aus der Umgebung und über den nachfolgend angeordneten Kühlmittel/Kältemittel-Wärmeübertrager 16 Wärme des wärmeren Kältemittels aus dem zweiten Kühlkreislauf auf. In Folge der nachfolgenden Druckerhöhung durch den Kältemittelverdichter 21 erreicht das Kältemittel eine ausreichend hohe Temperatur, so dass es Wärme an die den Innenraum-Wärmeübertrager 4 durchströmende Luft abgeben und daher zu Heizzwecken verwendet werden kann.

Dadurch, dass zwei aufeinander folgende Wärmeübertrager 24 und 16 im Wärmepumpen-Kältemittelkreislauf 20 hintereinander angeordnet sind, kann die Leistung der einzelnen Wärmeübertrager abgesenkt werden. Somit verringert sich die im Umgebungs-Wärmeübertrager 24 aufgenommene Wärme, wodurch sich vorteilhafterweise die Vereisung des UmgebungsWärmeübertragers 24 in diesem Betriebszustand verlangsamt oder ganz entfällt. Außerdem steigt in Folge der kleineren zu übertragenden Leistung der Saugdruck an, was in Bezug auf den Wirkungsgrad des Wärmepumpen-Kältemittelkreislaufs 20 vorteilhaft ist.

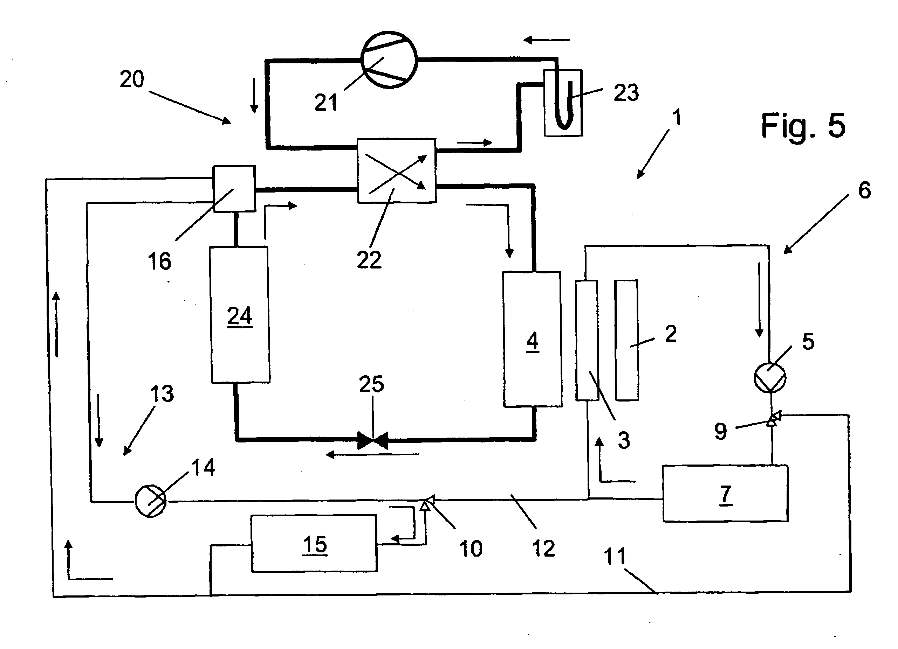

Fig. 5 zeigt einen Heizbetrieb der Klimaanlage, wobei die Motorabwärme des Verbrennungsmotors 7 zum Heizen genutzt wird. In diesem Fall wird - zusätzlich zum Heizer 3 - entsprechend dem in Fig. 4 dargestellten Betrieb die Wärme der Umgebung zu Heizzwecken genutzt, wofür der Kältemittelkreislauf 20 und der zweite Kühlkreislauf 13 wie zuvor beschrieben durchströmt werden. Da der Innenraum-Wärmeübertrager 4 luftanströmseitig des Heizers 3 angeordnet ist, wärmt er die Luft vor, wodurch die Gesamt-Heizleistung verbessert werden kann.

Alternativ zu einem Verbrennungsmotor 7 kann an entsprechender Stelle auch eine Brennstoffzelle angeordnet sein, deren Abwärme über das Kühlmittel nutzbar ist. Natürlich sind auch entsprechende Ausgestaltungen mit Kombinationen von Verbrennungsmotor/Brennstoffzelle möglich, deren Abwärme über einen gemeinsamen oder ggf. auch getrennt ausgebildete Kühlkreisläufe zum Heizen verwendet werden kann.

Der Wärmepumpen-Kältemittelkreislauf 20 muss jedoch nicht in allen Betriebsbedingungen umgewälzt werden. Insbesondere wenn der Umgebungswärme-Übertrager 24 vereist ist, oder wenn die Gefahr eines Flash-Foggings besteht, so kann mit der konventionellen PTC-Heizung 2 geheizt werden, bis geeignetere Betriebsbedingungen erreicht sind und wieder auf einen energieoptimierten Betrieb der Klimaanlage 1 umgeschaltet werden kann.

Eine erfindungsgemäße Klimaanlage ermöglicht es, dass das Wärmepumpensystem auf eine wirtschaftliche Größe ausgelegt werden kann, die fehlende Leistung bei extremen Betriebsbedingungen kann durch ein Zuheizsystem übernommen werden.

Um ein Flash-Fogging zu vermeiden und dennoch einen möglichst schnellen Wärmepumpenbetrieb zu ermöglichen, kann die Wärmepumpenleistung entsprechend der DE 101 49 757 A1 oder der DE 101 42 740 A1 erfolgen, so dass der Verdampfer möglichst schnell getrocknet und damit die Gefahr des Flash-Foggings beseitigt wird.

Fig. 6 zeigt eine Variante der Klimaanlage, gemäß der im Kältemittelkreislauf parallel zum Verbrennungsmotor 7 ein Heizer 8 angeordnet ist, der zur Erwärmung des Kühlmittels verwendet werden kann. In diesem Fall entfällt der PTC-Heizer, dessen Funktion von dem Heizer 8 übernommen wird. Hierbei ist jedoch zusätzlich ein Umwälzen des Kühlmittels durch die erste Pumpe 5 erforderlich, was im Falle eines direkt im Luftstrom angeordneten PTC-Heizers entfallen kann.

Zusätzlich können in den ersten oder zweiten Kühlmittelkreislauf noch Wärmen weiterer Abwärmequellen, wie zum Beispiel die Abwärme des Elektromotors bzw. Generators oder der Leistungselektronik, eingekoppelt werden. Die Einkopplung erfolgt dann je nach Betriebstemperaturniveau zur Nutzung beim Reheat-Betrieb oder als Wärmequelle beim Wärmepumpenbetrieb (erster Kühlkreislauf, bzw. zur Beheizung der Kabine oder Vorwärmung des Verbrennungsmotors im zweiten Kühlkreislauf). Durch Einkopplung in den zweiten Kühlkreislauf 13 ist es darüber hinaus möglich, die Abwärme im Abluftwärmeübertrager 15 an die Umgebung abzuführen, falls sie nicht benötigt wird.

Der gesamte Kühlkreislauf ist nur unvollständig gezeichnet, um die wesentlichen Gesichtspunkte der Erfindung zu verdeutlichen. Je nach konkretem Einsatzfall kann es nötig sein, die Pumpen an anderer Stelle zu positionieren, weitere Armaturen wie Ventile oder Ausgleichsbehälter hinzuzunehmen oder beispielsweise den Zuheizer 8 anders in den gesamten Kühlkreislauf einzubinden um ggf. eine Vorwärmung des Verbrennungsmotors oder des Brennstoffzellensystems zu ermöglichen.

## Patentansprüche

1. Klimaanlage für ein durch einen Motor angetriebenes Fahrzeug mit einem Kältemittelkreislauf (20) mit mehreren Wärmeübertragern (4) einschließlich eines Umgebungs-Wärmeübertragers (24) durch die ein Kältemittel für einen Wärmetausch mit der sie durchströmenden Luft leitbar ist,
wobei die Wärmeübertrager (4, 24) in Abhängigkeit des Betriebszustandes der Klimaanlage als Heizer oder als Verdampfer betreibbar sind, wobei mindestens ein Kühlmittel/Kältemittel Wärmeübertrager (16) im Kältemittelkreislauf (20) vorgesehen ist, welcher dem Wärmetausch mit einem getrennt vom Kältemittelkreislauf (20) ausgebildeten Kühlmittelkreislauf (13) dient, wobei im Kältemittelkreislauf (20) der Umgebungs-Wärmeübertrager (24) und der Kühlmittel/Kältemittel Wärmeübertrager hintereinander angeordnet und von einem der mehreren Wärmeübertrager (4) durch ein Expansionsorgan (25) getrennt sind, **dadurch gekennzeichnet, dass** bei einem Heizbetrieb zuerst der Umgebungs-Wärmeübertrager (24) und danach der Kühlmittel/Kältemittel-Wärmeübertrager (16) vom Kältemittel zur Aufnahme von Wärme aus der Umgebung bzw. vom Kühlmittel durchströmt werden.

2. Klimaanlage nach Anspruch 1, **dadurch gekennzeichnet, dass** der Kältemittelkreislauf (20) eine Strömungsrichtungsumkehr für das Kältemittel in zumindest einem Bereich des Kältemittelkreislaufs (20) vorsieht, in welchem der Umgebungs-Wärmeübertrager (24), der Kühlmittel/Kältemittel Wärmeübertrager (16) und eines der mehreren Wärmeübertrager (4) angeordnet sind.

3. Klimaanlage nach einem der vorhergehenden Ansprüche, **dadurch gekennzeichnet, dass** zwei Kühlmittelkreisläufe (6, 13) vorgesehen sind, die jeweils von einer Pumpe (5, 14) umgewälzt werden, wobei die beiden Kreisläufe (6, 13) miteinander verbindbar sind, so dass ein Kühlmittelaustausch erfolgt.

4. Klimaanlage nach Anspruch 3, **dadurch gekennzeichnet, dass** im verbundenen Zustand der Kühlmittelkreisläufe (6, 13) ein Heizer (3), welcher der Erwärmung der vom Verdampfer kommenden und dem Fahrzeuginnenraum zuzuführenden Luft dient, und der Kühlmittel/Kältemittel Wärmeübertrager (16), welcher zum Wärmetausch mit dem Kältemittel dient, vom Kühlmittel durchströmbar sind, wobei Wärme vom Kältemittelkreislauf (20) zum Heizer (3) geführt wird.

5. Verfahren zum Betreiben einer Klimaanlage gemäß einem der Ansprüche 1 bis 4, wobei ein Wärmetausch des Kältemittelkreislaufs (20) mit dem Kühlmittelkreislauf (13) im Kühlmittel/Käftemittel-Wärmeübertrager (16) vorgesehen ist, **dadurch gekennzeichnet, dass** im Wärmepumpen-Heizbetrieb über einen im Kühlkreislauf (13) angeordneten Abluftwärmeübertrager (15) Wärme aus der Kabinenabluft und/oder weiterer im Fahrzeug abfallender Abwärme aufgenommen wird, die über das Kühlmittel an den Kühlmittel/Kältemittel-Wärmeübertrager (16) weitergeleitet und an das Kältemittel abgegeben wird.

6. Verfahren nach Anspruch 5, **dadurch gekennzeichnet, dass** im normalen Kühlbetrieb der Kühlmittel/Kältemittel-Wärmeübertrager (16) Wärme an das Kühlmittel abgibt, welches die aufgenommene Wärme seinerseits über einen im Kühlkreislauf (13) angeordneten Abluftwärmeübertrager (15) an die Umgebung abgibt.

7. Verfahren nach Anspruch 5 oder 6, **dadurch gekennzeichnet, dass** ein Reheatbetrieb möglich ist, bei dem die vom kältemittelgekühlten Verdampfer kommende, dem Fahrzeuginnenraum zuzuführende Luft wieder erwärmt wird,
wobei der Kühlmittel/Kältemittel-Wärmeübertrager (16) Wärme an das Kühlmittel abgibt, welches die aufgenommene Wärme seinerseits über einen Heizer (3) in einem Kühlkreislauf (13, 6) an die dem Fahrzeuginnenraum zuzuführende Luft abgibt.

8. Verfahren nach einem der Ansprüche 5 bis 7, **dadurch gekennzeichnet, dass** ein Reheatbetrieb möglich ist, bei dem die vom kältemittelgekühlten Verdampfer kommende, dem Fahrzeuginnenraum zuzuführende Luft wieder erwärmt wird,
wobei der Kohlmittel/Kältemittel-Wärmeübertrager (16) Wärme an das Kühlmittel abgibt, welches die aufgenommene Wärme seinerseits über einen im Kühlkreislauf (13) angeordneten Abluftwärmeübertrager (15) an die Umgebung abgibt, und die dem Fahrzeuginnenraum zuzuführende Luft über einen Heizer (3) erwärmt wird, welcher in einem getrennten Kühlkreislauf (6) angeordnet ist und die Abwärme eines anderen Bauteils, insbesondere eines Verbrennungsmotors (7) oder einer Brennstoffzelle, verwendet.

## Claims

1. An air-conditioning system for a motor-driven vehicle, having a refrigerant circuit (20) with a plurality of heat exchangers (4), including an ambient heat exchanger (24), through which a refrigerant can be conducted for an exchange of heat with the air which flows through them, with it being possible for the heat exchangers (4, 24) be operated as heaters or as evaporators as a function of the operating state of the air-conditioning system, at least one coolant/refrigerant heat exchanger (16) being provided in the refrigerant circuit (20) and serves the exchange of heat with a coolant circuit (13) which is formed separately from the refrigerant circuit (20), the ambient heat exchanger (24) and the coolant/refigerant heat exchanger being arranged behind one another in the refrigerant circuit (20) and separated from one of the plurality of heat exchangers (4) by an expansion element (25), **characterized in that** during heating operation coolant or refrigerant first flows through the ambient heat exchanger (24) and then through the coolant/refrigerant heat exchanger (16) in order to absorb heat from the surroundings.

2. The air-conditioning system as claimed in claim 1, **characterized in that** the refrigerant circuit (20) provides a flow direction reversal for the refrigerant in at least one region of the refrigerant circuit (20) in which the ambient heat exchanger (24), the coolant/refrigerant heat exchanger (16), and one of the plurality of heat exchangers (4) are arranged.

3. An air-conditioning system as claimed in one of the preceding claims, **characterized in that** two coolant circuits (6, 13) are provided, which are circulated in each case by a pump (5, 14), with it being possible for the two circuits (6, 13) to be connected to one another such that an exchange of coolant takes place.

4. The air-conditioning system as claimed in claim 3, **characterized in that**, in the connected state of the coolant circuits (6, 13), coolant can flow through a heater (3), which serves to heat the air which passes from the evaporator and which is to be supplied to the vehicle interior space, and through the coolant/refrigerant heat exchanger (16), which serves the exchange of heat with the coolant, with heat being conducted from the refrigerant circuit (20) to the heater (3).

5. A method for operating an air-conditioning system as claimed in one of claims 1 to 5, with an exchange of heat of the refrigerant circuit (20) with the coolant circuit (13) being provided in the coolant/refrigerant heat exchanger (16), **characterized in that**, in the heat pump heating mode, heat from the cabin waste air and/or other waste heat which is generated in the vehicle is absorbed via a waste air heat exchanger (15) arranged in the cooling circuit (13), which waste heat is conducted by means of the coolant to the coolant/refrigerant heat exchanger (16) and is dissipated to the refrigerant.

6. The method as claimed in claim 5, **characterized in that**, in the normal cooling mode, the coolant/refrigerant heat exchanger (16) dissipates heat to the coolant, which in turn dissipates the absorbed heat via a waste air heat exchanger (15) arranged in the cooling circuit (13) to the environment.

7. The method as claimed in claim 5 or 6, **characterized in that** a reheat mode is possible, in which the air which passes from the refrigerant-cooled evaporator and which is to be supplied to the vehicle interior space is re-heated, with the coolant/refrigerant heat exchanger (16) dissipating heat to the coolant, which in turn dissipates the absorbed heat via a heater (3) in a cooling circuit (13, 6) to the air which is to be supplied to the vehicle interior space.

8. A method as claimed in one of claims 5 to 7, wherein a reheat mode is possible, in which the air which passes from the refrigerant-cooled evaporator and which is to be supplied to the vehicle interior space is re-heated, with the coolant/refrigerant heat exchanger (16) dissipating heat to the coolant, which in turn dissipates the absorbed heat via a waste air heat exchanger (15) arranged in the cooling circuit (13) to the environment, and the air which is to be supplied to the vehicle interior space is heated by means of a heater (3), which is arranged in a separate cooling circuit (6) and uses the waste heat of another component, in particular of an internal combustion engine (7) or of a fuel cell.

## Revendications

1. Système de climatisation pour un véhicule commandé par un moteur, comprenant un circuit de fluide frigorigène (20) comportant plusieurs échangeurs de chaleur (4), y compris un échangeur de chaleur (24) de milieu ambiant, à travers lesquels peut être dirigé un fluide frigorigène prévu pour un échange de chaleur avec l'air traversant lesdits échangeurs de chaleur, où les échangeurs de chaleur (4, 24), en fonction de l'état de fonctionnement du système de climatisation, peuvent être actionnés comme des radiateurs ou comme des évaporateurs, où il est prévu, dans le circuit de fluide frigorigène (20), au moins un échangeur de chaleur (16) de liquide de refroidissement / de fluide frigorigène qui sert à l'échange de chaleur avec un circuit de liquide de refroidissement (13) configuré séparément du circuit de fluide frigorigène (20), où l'échangeur de chaleur (24) de milieu ambiant et l'échangeur de chaleur de liquide de refroidissement / de fluide frigorigène sont disposés l'un derrière l'autre dans le circuit de fluide frigorigène (20), un détendeur (25) les séparant de l'un des échangeurs formant la pluralité d'échangeurs de chaleur (4),
**caractérisé en ce que**, au cours d'un fonctionnement en mode chauffage, d'abord l'échangeur de chaleur (24) de milieu ambiant puis l'échangeur de chaleur (16) de liquide de refroidissement / de fluide frigorigène sont traversés par le fluide frigorigène servant à absorber de la chaleur provenant du milieu ambiant, ou bien par le liquide de refroidissement.

2. Système de climatisation selon la revendication 1,
**caractérisé en ce que** le circuit de fluide frigorigène (20) prévoit, dans au moins une zone du circuit de fluide frigorigène (20), une inversion de la direction d'écoulement pour le fluide frigorigène, zone dans laquelle sont disposés l'échangeur de chaleur (24) de milieu ambiant, l'échangeur de chaleur (16) de liquide de refroidissement / de fluide frigorigène et l'un des échangeurs formant la pluralité d'échangeurs de chaleur (4).

3. Système de climatisation selon l'une ou l'autre des revendications précédentes, **caractérisé en ce qu'**il est prévu deux circuits de liquide de refroidissement (6, 13) qui sont commandés à chaque fois par une pompe de circulation (5, 14), où les deux circuits (6, 13) peuvent communiquer entre eux, de manière telle qu'il se produise un échange de liquide de refroidissement.

4. Système de climatisation selon la revendication 3,
**caractérisé en ce que**, lorsque les circuits de liquide de refroidissement (6, 13) sont raccordés, un radiateur (3), qui sert au chauffage de l'air provenant de l'évaporateur et devant être fourni à l'habitacle du véhicule, et l'échangeur de chaleur (16) de liquide de refroidissement / de fluide frigorigène, qui sert à l'échange de chaleur avec le fluide frigorigène, peuvent être traversés par le liquide de refroidissement, où de la chaleur provenant du circuit de fluide frigorigène (20) est dirigée jusqu'au radiateur (3).

5. Procédé de fonctionnement d'un système de climatisation selon l'une quelconque des revendications 1 à 4, où il est prévu, dans l'échangeur de chaleur (16) de liquide de refroidissement / de fluide frigorigène, un échange de chaleur du circuit de fluide frigorigène (20), avec le circuit de liquide de refroidissement (13), **caractérisé en ce que**, au cours du fonctionnement de la pompe à chaleur en mode chauffage, de la chaleur provenant de l'air d'évacuation de l'habitacle du véhicule et / ou de la chaleur dissipée, additionnelle, diminuant dans le véhicule, est absorbée par un échangeur de chaleur (15) d'air d'évacuation disposé dans le circuit de refroidissement (13), chaleur qui est dirigée, par le liquide de refroidissement, jusqu'à l'échangeur de chaleur (16) de liquide de refroidissement / de fluide frigorigène et fournie au fluide frigorigène.

6. Procédé selon la revendication 5, **caractérisé en ce que**, au cours du fonctionnement normal en mode refroidissement, l'échangeur de chaleur (16) de liquide de refroidissement / de fluide frigorigène fournit de la chaleur au liquide de refroidissement qui, de son côté, via un échangeur de chaleur (15) d'air d'évacuation disposé dans le circuit de refroidissement (13), fournit au milieu ambiant la chaleur absorbée.

7. Procédé selon la revendication 5 ou 6, **caractérisé en ce qu'**un fonctionnement en mode réchauffage est possible, au cours duquel est à nouveau chauffé l'air provenant de l'évaporateur refroidi par le fluide frigorigène et devant être fourni à l'habitacle du véhicule, où l'échangeur de chaleur (16) de liquide de refroidissement / de fluide frigorigène fournit de la chaleur au liquide de refroidissement qui, de son côté, via un radiateur (3) disposé dans un circuit de refroidissement (13, 6), fournit la chaleur absorbée, à l'air devant être fourni à l'habitacle du véhicule.

8. Procédé selon l'une quelconque des revendications 5 à 7,
**caractérisé en ce qu'**un fonctionnement en mode réchauffage est possible, au cours duquel est à nouveau chauffé l'air provenant de l'évaporateur refroidi par le fluide frigorigène et devant être fourni à l'habitacle du véhicule, où l'échangeur de chaleur (16) de liquide de refroidissement / de fluide frigorigène fournit de la chaleur au liquide de refroidissement qui, de son côté, via un échangeur de chaleur (15) d'air d'évacuation disposé dans le circuit de refroidissement (13), fournit au milieu ambiant la chaleur absorbée, et l'air devant être fourni à l'habitacle du véhicule est chauffé par un radiateur (3) qui est disposé dans un circuit de refroidissement séparé (6) et utilise la chaleur dissipée d'un autre composant, en particulier d'un moteur à combustion interne (7) ou d'une pile à combustible.
